# EUROPÄISCHE PATENTSCHRIFT

(11) **EP 3 428 498 B1**
(45) Veröffentlichungstag und Bekanntmachung des Hinweises auf die Patenterteilung: **17.06.2020**
(21) Anmeldenummer: 17180713.4
(22) Anmeldetag: 11.07.2017
(51) Int. Cl.: F16L 19/00, F16L 19/065, F16L 47/04, F16L 47/12, F16L 21/04, F16L 47/10

(54) **ROHR, INSBESONDERE KUNSTSTOFFROHR FÜR ABWASSERLEITUNGEN**
PIPE, IN PARTICULAR PLASTIC PIPE FOR DRAIN PIPES
TUBE, EN PARTICULIER TUBE EN PLASTIQUE POUR CONDUITES D'ÉVACUATION D'EAUX USÉES

(43) Veröffentlichungstag der Anmeldung: 16.01.2019
(73) Patentinhaber: Lutec GmbH Verwaltungs- und Beteiligungsgesellschaft, 49424 Goldenstedt-Lutten (DE)
(72) Erfinder: Lüers, Gregor, 49424 Lutten (DE)
(74) Vertreter: Meyer, Ludgerus

(56) Entgegenhaltungen:
- WO-A1-02/086371
- DE-A1- 2 418 014
- GB-A- 1 586 862
- GB-A- 2 180 902

## Beschreibung

Die Erfindung bezieht sich auf ein Rohr, insbesondere Kunststoffrohr für Abwasserleitungen, nach dem Oberbegriff des Anspruchs 1 und des Anspruchs 2.

Ein solches Rohr ist aus der WO 02/086 371 A bekannt.

Seit Jahrzehnten werden zur Ableitung von Abwässern oder Regenwasser aus einzelnen Rohrlängen zusammengesetzte Kunststoffabwasserrohre verwendet. Ein Muffenende eines derartigen Rohres ist dabei mit einer Sicke versehen, in die eine Ringdichtung oder Lippendichtung eingesetzt ist. Zur Verbindung zweier Rohre wird das Spitzende eines weiteren Rohres dabei in die Muffe eingeschoben, wobei die Dichtung zwischen dem Sickengrund der Sicke und der Oberfläche des Spitzendes des eingesteckten Rohres verpresst wird. Nach dem gleichen Prinzip werden Formteile, wie Bögen, Abzweigungen, Überschiebmuffen, Doppelmuffen, Reduzierstücke usw., ausgebildet. Zwischen der Forderung nach hoher Dichtigkeit und der Möglichkeit, die Rohre mit nicht zu hohem Kraftaufwand zusammenstecken zu können, ist ein Kompromiss zu finden. Derartige Rohrsysteme sind daher nur für die drucklose Verwendung zugelassen. Da das Dichtprinzip nur eine begrenzte Verpressung der verwendeten Dichtung erlaubt, sind solche Rohrsysteme in Grundwasserschutzgebieten nur bedingt verwendbar.

Der Kraftaufwand zum Zusammenstecken zweier Rohre hängt vom Rohrdurchmesser und der Art der verwendeten Dichtung ab. Solche Rohre oder Formteile weisen am Spitzende auch eine Schräge oder auch "Fase genannt" auf. Diese ist erforderlich, um ein Einschieben in die Ringdichtung zu ermöglichen. Üblicherweise werden die Dichtung sowie das Spitzende des einzusteckenden Rohres oder Formteils mit einem Gleitmittel versehen, um die Reibung und die erforderliche Steckkraft zu minimieren. Wenn bei ungünstigen Toleranzverhältnissen beim Vorschieben des Spitzendes eines Rohres in eine Muffe die verwendete Dichtung teilweise oder ganz aus der Sicke in die Muffe geschoben wird, kann es zu Undichtigkeiten und zur Verengung des Leitungsquerschnitts führen.

Häufig ist es erforderlich, zunächst eine Probemontage durchzuführen. Dazu wird die Ringdichtung aus der Sicke entnommen und die Rohre werden probeweise zusammengesteckt. Nachdem die richtigen Formteile gefunden und die Rohrlängen festgelegt sind, wird die Ringdichtung wieder in die Sicke der Muffe eingesetzt und die Rohrenden werden zusammengesteckt. Dabei ist nicht auszuschließen, dass das Einsetzen der Ringdichtung vergessen wird und der Fehler erst nach Inbetriebnahme der Abwasserleitung festgestellt wird.

Zur Änderung einer Abwasserleitung ist häufig auch eine Trennung bestehender Leitungssysteme erforderlich. Dies gestaltet sich als sehr schwierig und ist in vielen Fällen unmöglich, wenn die verlegte Leitung schon länger besteht. Bei sogenannten fliegenden Bauten, z. B. Toilettenanlagen auf Festplätzen, der Baustellenentwässerung oder provisorischen Entwässerungen, müssen Abwasserleitungen häufig temporär zusammengesteckt und wieder getrennt werden. Das gestaltet sich bei bestehenden Systemen als sehr aufwändig.

Bei Schlauchverbindungen, z. B. bei Gartenschlauchsystemen, ist es bekannt, Verschraubungen zu verwenden, die auf ein Anschlussstück am Ende eines Rohres aufgeschraubt werden können, wobei durch die Verschraubung ringförmig angeordnete Lamellen des Anschlussstücks in die Oberfläche des Schlauches eingedrückt werden und durch Verpressung mit einer Hülse des Anschlussstücks eine druckfeste Dichtung erstellen.

Im Bereich von Druckwasserleitungen für feste Leitungen ist es ebenfalls bekannt, Schraubkappen auf Anschlussstücke zu setzen, bei denen ein zu befestigendes Rohr beim Aufschrauben eines Schraubrings auf das Anschlussstück durch Lamellen des Anschlussstücks festgelegt wird und die Dichtung zwischen dem Anschlussstück und dem Rohr mittels einer Ringdichtung bewirkt wird, die auf die Oberfläche des zu arretierenden Rohres drückt. Die hierbei einzuhaltenden Toleranzen sind für große Rohrdurchmesser nicht erreichbar.

Der Erfindung liegt die Aufgabe zugrunde, ein Rohr, insbesondere Kunststoffrohr für Abwasserleitungen, anzugeben, das gegenüber bekannten Systemen eine verbesserte Abdichtung für ein in das Kunststoffrohr einzuschiebendes Spitzende eines weiteren Rohres ermöglicht und das ein leichtes Montieren und Demontieren einer Rohrverbindung ermöglicht.

Diese Aufgabe wird durch die im Anspruch 1 oder im Anspruch 2 angegebene Erfindung gelöst. Vorteilhafte Weiterbildungen der Erfindung sind in Unteransprüchen angegeben.

Die Erfindung geht aus von einem Rohr, insbesondere Kunststoffrohr für Abwasserleitungen, das wenigstens ein Muffenende aufweist, welches mit einer Ringsicke und einem Muffenhals versehen ist, und ein erstes Rohr bildet, in dessen Muffenende das Spitzende eines zweiten Rohres einsteckbar und daraus wieder entfernbar ist, und bei der eine elastische Ringdichtung in die Ringsicke eingesetzt ist.

Erfindungsgemäß ist der Muffenhals des Rohres mit einem Schraubgewinde versehen, auf das ein Schraubring aufschraubbar ist, der einen inneren Ringteil und einen äußeren Ringteil enthält, zwischen denen ein Ringspalt ausgebildet ist. Die Ringteile sind über einen von der Ringsicke abgewandten Ringboden verbunden. Die Vorderkante des radial inneren Ringteils drückt beim Aufschrauben des Schraubringes auf das Schraubgewinde eine in die Ringsicke eingelegte Ringdichtung zusammen, wodurch die Abdichtung erfolgt und das Spitzende des zweiten Rohres im ersten Rohr arretiert wird.

Wenn sich bei einem derartigen Rohr der Schraubring in Offenstellung befindet, kann das Spitzende eines zweiten Rohres auch ohne Fase nahezu ohne Kraftaufwand in das Muffenende des ersten Rohres eingeführt werden oder daraus wieder entnommen werden. Beim Festschrauben des Schraubringes, der einen inneren und einen äußeren Ringteil enthält, drückt der innere Ringteil mit seiner Vorderkante die in die Ringsicke eingelegte Ringdichtung zusammen und verpresst damit die eingelegte Ringdichtung. Damit wird das Spitzende des zweiten Rohres im ersten Rohr arretiert. Wenn eine derartige Schraubverbindung wieder gelöst werden soll, erfolgt dies auf einfache Weise durch Rückdrehung des Schraubringes, wodurch die Dichtung entlastet wird und das Trennen der Rohrabschnitte auf einfache Weise ermöglicht wird. Dadurch, dass der Schraubring eine inneren und einen äußeren Ringteil enthält, ist die Gefahr verringert, dass die Verschraubung durch Verschmutzung in ihrer Funktion beschränkt wird. Der erhöhte Pressdruck der zusammengedrückten Dichtung verhindert es ferner, dass Schmutzwasser über die Dichtung in die Verschraubung gelangen kann.

Bei Zuschnitten von Rohrenden ist ein Anschrägen oder Anfasen des Spitzendes nicht mehr erforderlich, da der Dichtungsring erst nach dem Einstecken verpresst wird. Dadurch wird eine Probemontage wesentlich erleichtert. Ein weiterer Vorteil dieser Verbindung besteht darin, dass ein Wurzeleinwuchs in die Muffe durch die starke Verpressung der Ringdichtung verhindert wird.

Abweichend zum Stand der Technik wird der Anpressdruck zwischen Muffe des ersten Rohres und Spitzende des zweiten Rohres nicht unmittelbar über den Abstand zwischen dem Sickengrund der Sicke, sowie der Form und Größe der Dichtung und der Oberfläche des Spitzendes des zweiten Rohres hergestellt, sondern durch den axialen Anpressdruck zwischen der Vorderkante des Schraubringes und der Dichtung, so dass der erforderliche Anpressdruck durch eine ausreichende Drehung des Schraubringes hergestellt wird.

In einer ersten Alternative der Erfindung ist das Schraubgewinde ein auf der Innenseite des Muffenhalses ausgebildetes Innengewinde, in das ein auf der Außenseite des inneren Ringteils des Schraubrings ausgebildetes Außengewinde einschraubbar ist. Der Innendurchmesser des äußeren Ringteils des Schraubringes ist dabei größer als der Außendurchmesser des Muffenhalses und der äußere Ringteil umgibt beim Aufschrauben des Schraubringes auf das Innengewinde den Muffenhals, wobei der Muffenhals in dem Ringspalt zwischen äußerem und innerem Ringteil aufgenommen ist.

In einer zweiten Alternative der Erfindung ist das Schraubgewinde ein auf der Außenseite des Muffenhalses ausgebildetes Außengewinde, auf das ein an der Innenseite des äußeren Ringteils ausgebildetes Innengewinde des Schraubringes aufschraubbar ist.

Vorzugsweise ist in die Ringsicke zwischen der Vorderkante des inneren Ringteils und der Ringdichtung ein Druck- und Gleitring eingesetzt. Dadurch lässt sich ein leichteres Verschrauben herstellen, da keine unmittelbare Berührung zwischen Schraubring und Ringdichtung vorhanden ist.

Die Ringdichtung ist im Querschnitt vorzugsweise dreieckig, oval oder keilförmig gestaltet, wobei bei einer dreieckförmigen Gestaltung mit abgerundeten Ecken ihre Ankathete radial zur Dichtringachse und ihre außen liegende Gegenkathete parallel zur Ringdichtungsachse verlaufen. Das hat den Vorteil, dass beim Aufschrauben der Schraubkappe die Ringdichtung über den Druck- und Gleitring so zusammengedrückt wird, das die der Oberfläche des einzusetzenden Rohres in der Sicke dem Schraubring gegenüberliegende Seite der Ringdichtung an den Boden der Sicke gedrückt wird, während das dem Druck- und Gleitring zugewandte Ende der Ringdichtung beim Aufschrauben der Schraubkappe auf das Spitzende des zweiten Rohres gedrückt wird. Bei Maximaltoleranz der zu verbindenden Rohre wird damit verhindert, dass das dem Schraubring gegenüberliegende Ende der Dichtung zwischen Muffe und Spitzende des zweiten Rohres eindringen könnte.

In einer bevorzugten Ausbildung der Ringdichtung ist diese oval ausgebildet, wobei in unbelasteter Stellung ihr Außendurchmesser im Wesentlichen dem Innendurchmesser der Ringsicke entspricht. Der Druck- und Gleitring ist dabei so gestaltet, dass beim Aufschrauben des Schraubrings sich die im entlasteten Zustand flach liegende ovale Dichtung in Radialrichtung aufrichtet, den Raum in der Sicke nahezu vollständig ausfüllt und durch die Rückstellkräfte der elastomeren Dichtung ein Herausfallen verhindert wird.

Eine weitere alternativ verwendbarer Ringdichtung in Form eines im Querschnitt U-förmigen Profils hat zwei Flanken an einer inneren Grundseite. Wird eine solche Ringdichtung so in eine Sicke eingeführt, dass die Flanken der U-förmigen Dichtung am Grund bzw. den Seiten der Ringsicke zur Anlage kommen, wird die Grundseite der Dichtung beim Zusammenpressen der Dichtung zur Anlage an die Oberfläche des Spitzende des zweiten Rohres gelangen. Zur Verbesserung der Dichteigenschaft der U-förmigen Ringdichtung kann diese auf ihrer äußeren Grundseite noch eine oder mehrere vorstehende ringförmige Rippen aufweisen.

Die axiale Länge des äußeren Ringteils der Schraubkappe ist vorzugsweise so bemessen, dass das Vorderende des äußeren Ringteils bei auf den Muffenhals aufgeschraubtem Schraubring bis an die äußere Rückflanke der Ringsicke geführt ist. Das vermeidet einerseits die Ausbildung eines Spaltes zwischen Schraubkappe und Sicke und damit die Verhinderung des Eindringens von Schmutz in die Schraubkappe sowie ferner einen definierten Anschlag, um definierte Andruckeigenschaften der Dichtung herzustellen.

Um leichter feststellen zu können, ob eine Verschraubung sich im offenen oder geschlossenem Zustand befindet, kann der Muffenhals des ersten Rohres eine farbliche Markierung enthalten, die anzeigt, wie weit der Schraubring auf den Muffenhals aufgeschraubt ist. Wenn diese Markierung noch gut zu sehen ist, bedeutet das, dass der Schraubring nicht ausreichend weit auf den Muffenhals aufgeschraubt ist.

Um zu vermeiden, dass der Schraubring von dem Gewinde zufällig abfällt oder abgeschraubt wird, kann das Gewinde einen Anschlag zur Drehbegrenzung enthalten, der ein einfaches Abnehmen oder Abfallen der Schraubkappe von dem Schraubgewinde verhindert.

Vor allem bei großen Rohrdurchmessern können die Kräfte zum Aufschrauben der Schraubkappe hoch werden, so dass zur Erleichterung des Aufschraubens oder Abschraubens der Schraubring mit einer äußeren Profilierung oder auch mit anderen Ansätzen zum Erfassen mittels eines geeigneten Werkzeugs versehen werden kann.

Vorzugsweise entspricht der Außendurchmesser des Schraubrings im Wesentlichen dem Außendurchmesser der Sicke, um einen gleichmäßigen Durchmesserübergang herzustellen.

Die Erfindung wird nachstehend anhand eines Ausführungsbeispiels näher erläutert. Es zeigen:
- Fig. 1: eine Explosionszeichnung der Einzelteile einer erfindungsgemäßen Rohrverbindung,
- Fig. 2 a: eine Rohrverbindung mit eingeschobenem Spitzende eines zweiten Rohres in das Muffenende eines ersten Rohres, wobei die Schraubkappe sich in Ausgangsstellung befindet und die verwendete Ringdichtung entlastet ist,

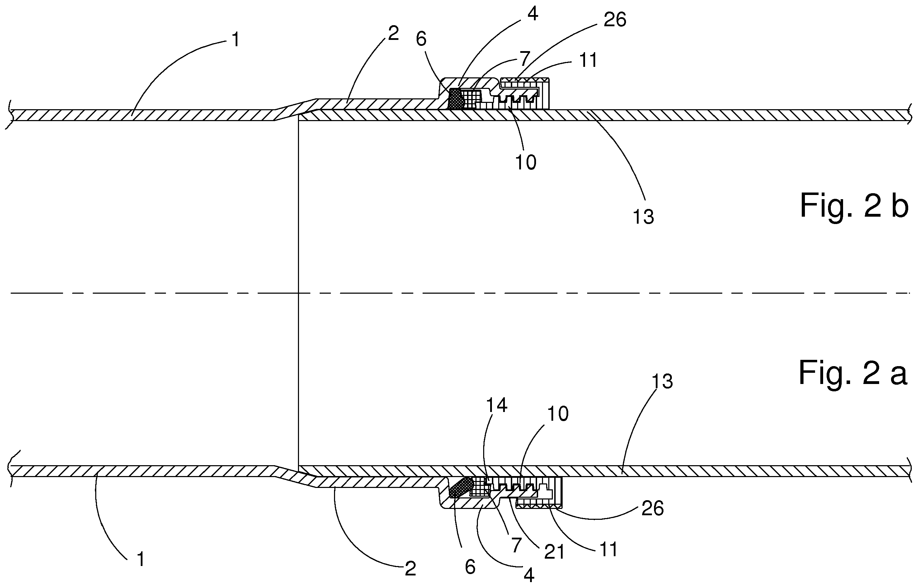

- Fig. 2 b: eine Verbindung gemäß Fig. 2a in verpresstem Zustand,

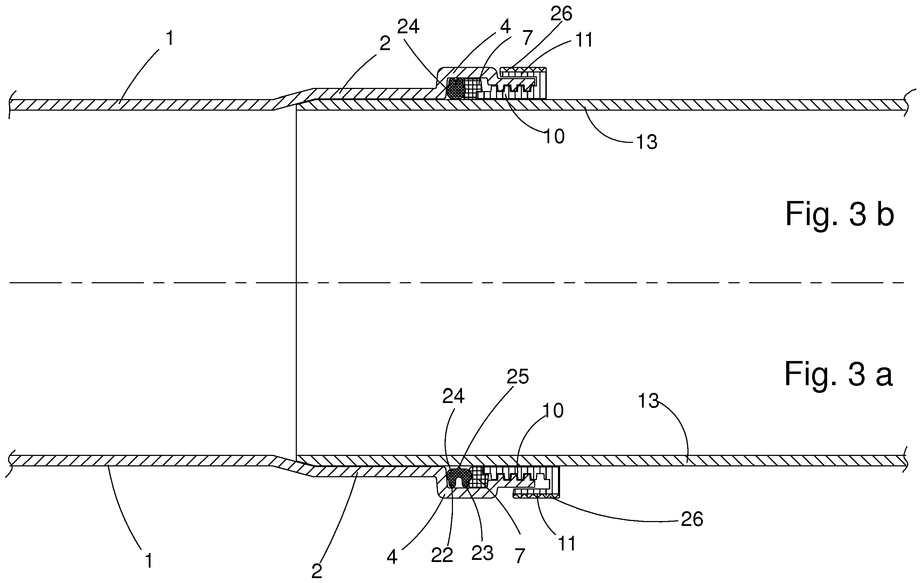

- Fig. 3 a: eine Schraubverbindung mit einer U-förmigen Dichtung in ungepresstem Zustand,
- Fig. 3: b eine Schraubverbindung mit aufgeschraubter Schraubkappe und verpresster Dichtung, und

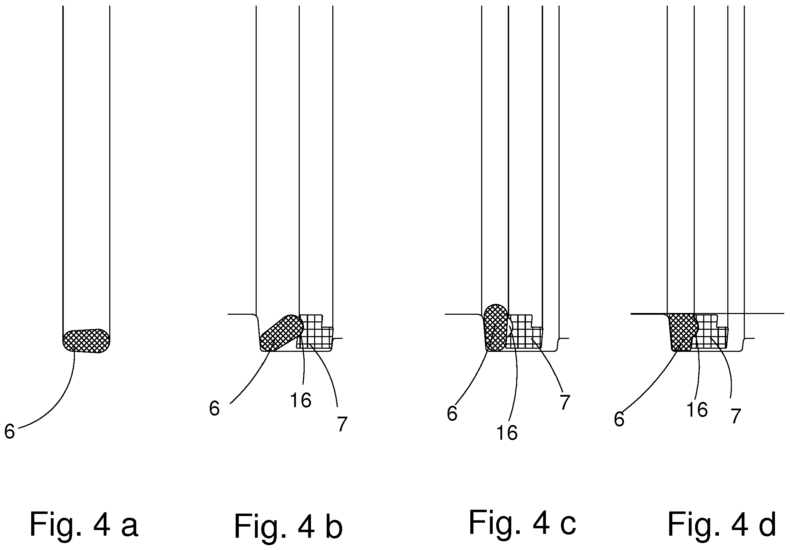

- Fig. 4 a-d: verschiedene Stellungen einer ovalen Ringdichtung in einer Sicke.

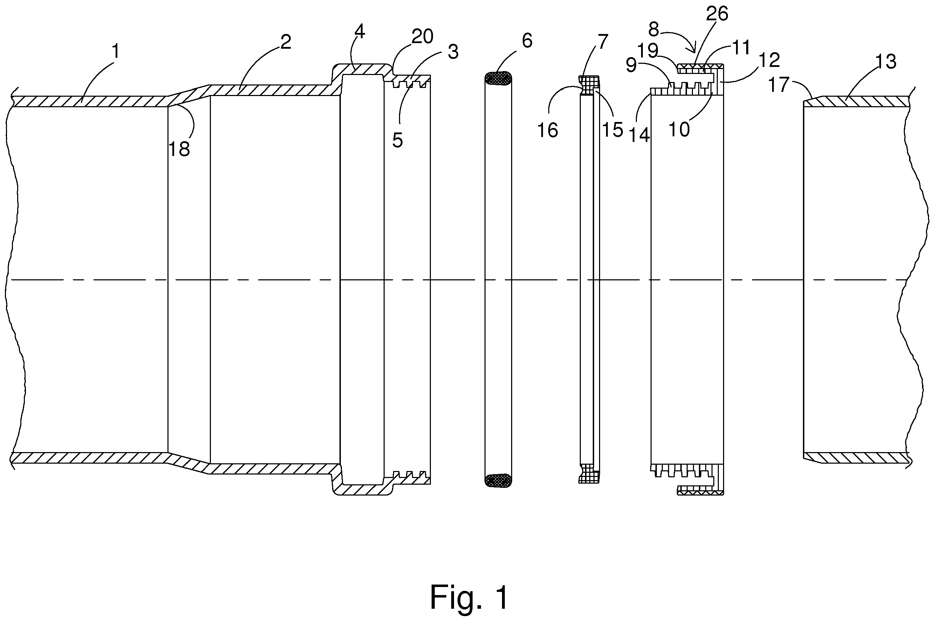

Fig. 1 zeigt die Einzelheiten einer Rohrverbindung gemäß der Erfindung. Ein erstes Rohr oder Formteil 1 enthält an seinem Ende eine Muffe 2, die über eine Schräge 18 eine Aufweitung des Rohrendes bildet. In der Muffe 2 ist eine Ringsicke 4 ausgebildet, in der eine Ringdichtung 6 aufgenommen werden kann. An die Ringsicke 4 schließt sich zum Ende des Rohres ein Muffenhals 3 an, der auf seiner Innenseite ein Schraubgewinde 5 aufweist. Ferner ist ein Druck- und Gleitring 7 vorhanden, der zusammen mit der ovalen Ringdichtung 6 in die Ringsicke 4 einlegbar ist.

Ein Schraubring 8 enthält einen inneren Ringteil 10 und einen äußeren Ringteil 11, die an der rohrabgewandten Seite über den Ringboden 12 miteinander verbunden sind. Der innere Ringteil 10 enthält auf seiner radial äußeren Oberfläche ein Schraubgewinde 9 zum Eingreifen in das Schraubgewinde 5 an der Innenseite des Muffenhalses 3. Der Schraubring 8 dient zur Abdichtung und Fixierung der Rohrverbindung des Rohres, wenn das Spitzende eines zweiten Rohres 13 in die Muffe 2 des ersten Rohres 1 eingeschoben wird. Dabei dient der Schraubring 8 zur sicheren Befestigung des zweiten Rohres oder Formteils 13 im ersten Rohr 1.

Das zweite Rohr 13 wird zur Verbindung mit dem ersten Rohr 1 mit seinem Spitzende so weit in die Muffe 2 eingeführt, bis die Schräge 17 oder das stumpf abgesägte Spitzende des zweiten Rohres 13 an die Schräge 18 in der Muffe 2 des ersten Rohres 1 anstößt. Da die Ringdichtung 6 bei gelöstem Schraubring 8 nicht von dem Innendurchmesser der Muffe 2 vorsteht und somit in diesem Zustand nicht unter Druck steht, kann das zweite Rohr 13 leicht in das erste Rohr 1 eingeführt werden.

An schwer zugänglichen Montageorten, z.B. Wanddurchbrüchen, unter Fundamenten oder in verengten Rohrgräben, wo kein Platz für das Schließen der Verbindung besteht, kann das Rohr oder Formteil auch unter mehr oder weniger starkem Druck in eine bereits geschlossene Verbindung gesteckt werden. Dazu muss wie bei herkömmlichen Stecksystemen auch Gleitmittel verwendet werden. Der Vorteil gegenüber herkömmlichen Systemen besteht aber darin, dass die Ringdichtung bereits eingespannt ist und nicht aus der Sicke gedrückt werden kann.

Zur Festlegung der Abdichtung der Rohrverbindung wird der Schraubring 8 mit seinem Schraubgewinde 9 in das Schraubgewinde 5 des Muffenhalses 3 eingeschraubt. Den vorläufigen Verbindungszustand zeigt Fig. 2 a. Der Schraubring 8 ist so weit auf den Muffenhals des ersten Rohres aufgeschraubt, das seine Vorderkante 14 in den Absatz 15 des Druck- und Gleitrings 7 eingetreten ist. Die im Ausgangszustand flache ovale Ringdichtung 6 ist durch spezielle Ausformung des Druck- und Gleitrings mittels einer axial gerichteten umlaufenden Ringnut 16 bereits in eine 45°-Position gedrückt worden, wobei ihr dem Druck- und Gleitring zugewandtes Ende gegen das Spitzende des zweiten Rohres 13 gerichtet ist und sich das dem Druck- und Gleitring abgewandte Ende in einer Ecke der Ringsicke zwischen Sickengrund und anschließender Flanke der Ringsicke befindet. In diesem Zustand der Rohrverbindung, in dem noch kein Druck auf die Dichtung in radialer Richtung vorliegt, kann das Spitzende des zweiten Rohres 13 problemlos in die Muffe eingeführt oder aus der Muffe wieder herausgenommen werden.

Der Muffenhals weist auch eine umlaufende Markierung 21 auf, die als farbliche Markierung ausgeführt ist und je nach erscheinender Breite einen offenen Zustand der Dichtung oder einen geschlossenen Zustand anzeigt, indem sichtbar ist, wie weit der Schraubring auf das Schraubgewinde aufgeschraubt ist.

Fig. 2 b zeigt den Zustand einer geschlossenen Rohrverbindung. Hierbei ist der Schraubring 8 so weit auf das Gewinde 5 aufgeschraubt, dass die Vorderkante 19 des äußeren Ringteils 11 gegen die Rückflanke 20 der Ringsicke 4 anstößt. Die Vorderkante 14 des inneren Ringteils 10 hat nun den Druck- und Gleitring 7 so weit in axialer Richtung des Rohres verschoben, dass die Ringdichtung 6 zusammengequetscht ist und den verbliebenen Hohlraum der Ringsicke nahezu vollständig ausfüllt. Die Markierung 21 ist nun nicht mehr zu sehen.

Zur Trennung der Rohrverbindung lässt sich der Schraubring 8 entweder manuell oder über ein geeignetes Werkzeug leicht wieder von dem Muffenhals abschrauben, so dass die Ringdichtung 6 entspannt wird und das Spitzende des zweiten Rohres wieder aus dem ersten Rohr herausgezogen werden kann.

Dadurch, dass die Vorderkante 19 des Schraubrings 8 im Zustand gemäß Fig. 2 b gegen die Rückflanke 20 der Sicke anstößt, kann auch im eingebauten Zustand einer derartigen Rohrverbindung nahezu kein Schmutz zwischen Muffenhals 3 und Schraubring 8 eintreten. Dadurch wird auch die Gewindeverbindung vor Verschmutzungen geschützt, so dass auch nach langer Zeit ein einfaches Lösen der Schraubverbindung möglich ist.

Die Figuren 3 a und 3 b zeigen die Verwendung einer alternativen Dichtung, die als U-förmige Dichtung ausgebildet ist, bei welcher zwei Flanken 22 und 23 gegen den Sickengrund gerichtet sind, und der Dichtungsboden an dem in das Rohr 1 eingeschobenen Spitzende des zweiten Rohres 13 anliegt. Auch hierbei führt das Festschrauben der Schraubverbindung mittels des Schraubrings 8 dazu, dass über den Druck- und Gleitring 7 die U-förmige Dichtung 24 zusammengedrückt wird und die erwünschte Dichtungsfunktion einnehmen kann. Zur Verbesserung der Dichteigenschaft kann die Ringdichtung 24 noch eine umlaufende radial gerichtete Dichtungsrippe 25 aufweisen, die eine zusätzliche Dichtfunktion gegenüber der Oberfläche des zweiten Rohres 13 bewirkt.

Die Figuren 4 a - 4 d zeigen verschiedene Stadien einer in eine Ringsicke eingelegten ovalförmigen Ringdichtung 6. Im unbelasteten Zustand ist die Dichtung 6 eine flache Ringdichtung, die mit einem vorderen Teil mit kleinerem und einem rückwärtigen Teil mit größerem Rundungsradius etwas unsymmetrisch ausgebildet ist. Wie Fig. 4 b zeigt, weist der Druck- und Gleitring 7 eine vordere Ringnut 16 auf, in die das hintere Ende der Ringdichtung 6 beim Vorschieben des Druck- und Gleitrings eintritt. Dabei wird die Ringdichtung 6 in eine 45°-Stellung gedrückt, bei der das Ende mit größerem Rundungsradius in der Ringnut 16 zur Anlage kommt, während das Ende der Dichtung 6 mit kleinerem Rundungsradius im Bereich zwischen Sickengrund und anschließender Flanke der Ringsicke verbleibt. Bei weiterem Anziehen des Schraubrings richtet sich die Dichtung 6 über den Druck- und Gleitring 7 in eine radial gerichtete Form auf. Bei eingeführtem Spitzende wird die Dichtung daher zusammengedrückt und nimmt eine Form gemäß Fig. 4 d an.

Das Aufrichtprinzip der Dichtung gemäß den Figuren 4 a - d ergibt sich in gleicher Weise bei Verwendung einer dreieckförmigen Dichtung, die sich beim Anziehen der Schraubverbindung entweder aufrichtet oder einfach zusammengepresst wird. Die Erfindung betrifft auch andere Formen von Dichtungen, die sich durch seitlichen Druck so zusammenpressen lassen, dass sich ihr Innenradius bei geeignetem seitlichem Druck ausreichend verringert.

Das Anziehen des Schraubrings bzw. dessen Lösen kann manuell oder maschinell erfolgen oder insbesondere bei größeren Durchmessern auch mittels geeigneter Greifwerkzeuge, wobei eine geeignete Profilierung 26 an der Außenseite des Schraubrings das Anziehen oder Lösen des Schraubrings erleichtert.

Die Erfindung betrifft nicht nur die Verbindung zweier Rohre mit einem Spitzende und einer Muffe, sondern auch verwandte Rohrausbildungen, wie eine Muffenhülse mit beidseitig ausgebildeter Muffe, in die zwei Spitzenden von Rohren eingesteckt werden können, Abzweige, Bögen, Reduzierstücke und ähnliche Ausbildungen. Unter der Bezeichnung "zweites Rohr" sind alle Arten von Rohrausbildungen zu verstehen, die wenigstens ein Spitzende aufweisen, das in eine erste Rohrausbildung mit wenigstens einem Muffenende einsteckbar ist.

Die Erfindung ist ferner nicht nur für drucklose Leitungen geeignet, sondern auch für Rohrleitungen für druckbehaftete Medien.

Die Erfindung eignet sich insbesondere für den Einsatz in kritischen Verlegesituationen, wie in Gebieten mit besonderen Sicherheitsvorkehrungen, und bei hohen Dichtungsanforderungen. Auch in Situationen, in denen ein häufiges Zusammensetzen und Trennen von Rohrleitungen erforderlich ist, ist die Erfindung mit großem Vorteil einzusetzen.

### Bezugszeichen

- 1: erstes Rohr
- 2: Muffe
- 3: Muffenhals
- 4: Ringsicke
- 5: Schraubgewinde
- 6: Ringdichtung
- 7: Druck- und Gleitring
- 8: Schraubring
- 9: Schraubgewinde
- 10: Ringteil
- 11: Ringteil
- 12: Ringboden
- 13: zweites Rohr
- 14: Vorderkante
- 15: Absatz
- 16: Ringnut
- 17: Schräge oder Fase
- 18: Schräge
- 19: Vorderkante
- 20: Rückflanke
- 21: Markierung
- 22: Flanke
- 23: Flanke
- 24: Ringdichtung
- 25: Rippe
- 26: Profilierung

## Patentansprüche

1. Rohr mit aufschraubbarem Schraubring, insbesondere Kunststoffrohr für Abwasserleitungen, das wenigstens ein Muffenende aufweist, welches mit einer Ringsicke (4) und einem Muffenhals (3) versehen ist und ein erstes Rohr (1) bildet, in dessen Muffenende das Spitzende eines zweiten Rohres oder Formteils (13) einsteckbar und daraus wieder entfernbar ist, und bei der eine elastische Ringdichtung (6) in die Ringsicke (4) eingesetzt ist, **dadurch gekennzeichnet, dass** der Muffenhals (3) des Rohres (1) mit einem Schraubgewinde (9) versehen ist, das ein auf der Innenseite des Muffenhalses (3) ausgebildetes Innengewinde ist, auf das der Schraubring (8) aufschraubbar ist, wobei der Schraubring einen inneren Ringteil (10) mit einem Außengewinde und einen äußeren Ringteil (11) enthält, zwischen denen ein Ringspalt ausgebildet ist, und die Ringteile (10, 11) über einen von der Ringsicke (4) abgewandten Ringboden (12) verbunden sind, wobei der Innendurchmesser des äußeren Ringteils (11) des Schraubrings (8) größer als der Außendurchmesser des Muffenhalses (3) gewählt ist, und der äußere Ringteil (11) beim Aufschrauben des Schraubrings (8) den Muffenhals (3) außenseitig umgibt und der Muffenhals (3) damit in dem Ringspalt aufgenommen ist, und wobei die Vorderkante (14) des inneren Ringteils (10) beim Aufschrauben des Schraubrings (8) auf das Schraubgewinde (9) die in die Ringsicke (4) eingelegte Ringdichtung (6) zusammendrückt und das Spitzende des zweiten Rohres oder Formteils (13) im ersten Rohr (1) arretiert, wobei der Innendurchmesser der Ringsicke größer als der Innendurchmesser des Muffenhalses ist.

2. Rohr mit aufschraubbarem Schraubring, insbesondere Kunststoffrohr für Abwasserleitungen, das wenigstens ein Muffenende aufweist, welches mit einer Ringsicke (4) und einem Muffenhals (3) versehen ist und ein erstes Rohr (1) bildet, in dessen Muffenende das Spitzende eines zweiten Rohres oder Formteils (13) einsteckbar und daraus wieder entfernbar ist, und bei der eine elastische Ringdichtung (6) in die Ringsicke (4) eingesetzt ist, **dadurch gekennzeichnet, dass** der Muffenhals (3) des Rohres (1) mit einem Schraubgewinde (9) versehen ist, das ein auf der Außenseite des Muffenhalses (3) ausgebildetes Außengewinde ist, auf das der Schraubring (8) aufschraubbar ist, wobei der Schraubring einen inneren Ringteil (10) und einen äußeren Ringteil (11) mit einem Innengewinde enthält, zwischen denen ein Ringspalt ausgebildet ist, und die Ringteile (10, 11) über einen von der Ringsicke (4) abgewandten Ringboden (12) verbunden sind, wobei der Innendurchmesser des äußeren Ringteils (11) des Schraubrings (8) größer als der Außendurchmesser des Muffenhalses (3) gewählt ist, und der äußere Ringteil (11) beim Aufschrauben des Schraubrings (8) den Muffenhals (3) außenseitig umgibt und der Muffenhals (3) damit in dem Ringspalt aufgenommen ist, und wobei die Vorderkante (14) des inneren Ringteils (10) beim Aufschrauben des Schraubrings (8) auf das Schraubgewinde (9) die in die Ringsicke (4) eingelegte Ringdichtung (6) zusammendrückt und das Spitzende des zweiten Rohres oder Formteils (13) im ersten Rohr (1) arretiert, wobei der Innendurchmesser der Ringsicke größer als der Innendurchmesser des Muffenhalses ist.

3. Rohr nach Anspruch 1 oder 2, **dadurch gekennzeichnet, dass** zwischen Vorderkante des inneren Ringteils (10) und der Ringdichtung (6) ein Druck- und Gleitring (7) in die Ringsicke (4) eingesetzt ist.

4. Rohr nach Anspruch 1, 2 oder 3, **dadurch gekennzeichnet, dass** die Ringdichtung (6) im Querschnitt oval gestaltet ist.

5. Rohr nach Anspruch 4, **dadurch gekennzeichnet, dass** der Druck- und Gleitring (7) an seiner der Ringdichtung (6) zugewandten Seite eine Ringnut (16) aufweist, die beim Aufschrauben des Schraubrings (8) eine radiale Verschiebung der rückwärtigen Kante der Ringdichtung (6) in Richtung der Oberfläche eines einzusteckenden zweiten Rohres (13) bewirkt.

6. Rohr nach einem der Ansprüche 1 - 3, **dadurch gekennzeichnet, dass** die Ringdichtung (6) im Querschnitt dreieck- oder keilförmig gestaltet ist, wobei ihre Ankathete radial zur Dichtringachse und ihre Gegenkathete parallel zur Dichtringachse im Sickengrund verlaufen.

7. Rohr nach Anspruch 6, **dadurch gekennzeichnet, dass** die Gegenkathete der Ringdichtung im Sickenboden der Ringsicke (4) angeordnet ist und die Ankathete gegen die Vorderkante des inneren Ringteils (10) gerichtet ist.

8. Rohr nach einem oder mehreren der Ansprüche 1 - 3, **dadurch gekennzeichnet, dass** die Ringdichtung (24) im Querschnitt U-förmig mit zwei Flanken (22, 23) und einer inneren Grundseite gestaltet ist, wobei die Flanken (22, 23) der Ringdichtung (24) radial zur Dichtringachse verlaufen.

9. Rohr nach Anspruch 8, **dadurch gekennzeichnet, dass** die Grundseite der Ringdichtung (24) mit einer umlaufenden Rippe (25) versehen ist.

10. Rohr nach Anspruch 8 oder 9, bei dem die Grundseite der Ringdichtung (24) an der Oberfläche des Spitzendes des zweiten Rohres (13) und die Flanken (22, 23) der Ringdichtung (24) im Sickengrund der Ringsicke (4) anliegen.

11. Rohr nach Anspruch 1 oder 2, **dadurch gekennzeichnet, dass** die axiale Länge des äußeren Ringteils (11) so bemessen ist, dass die Vorderkante des äußeren Ringteils (11) bei auf den Muffenhals (3) aufgeschraubtem Schraubring (8) bis an die äußere Rückflanke (20) der Ringsicke (4) geführt ist.

12. Rohr nach Anspruch 1 oder 2, **dadurch gekennzeichnet, dass** der Muffenhals (3) mit einer äußeren kontrastierenden Markierung (21) versehen ist, mittels der der Verbindungszustand einer aus einem ersten Rohr (1) und einem zweiten Rohr (13) zusammengesetzten Rohrverbindung visuell erkennbar ist.

13. Rohr nach einem oder mehreren der vorhergehenden Ansprüche, **dadurch gekennzeichnet, dass** das Gewinde zwischen dem Schraubring und dem Muffenhals mit einer Rastnase versehen ist, die ein ungewolltes Abschrauben des Schraubrings (8) vom Schraubgewinde (9) des ersten Rohres (1) verhindert.

14. Rohr nach einem oder mehreren der vorhergehenden Ansprüche, **dadurch gekennzeichnet, dass** der Schraubring (8) mit einer äußeren Profilierung (26) versehen ist.

15. Rohr nach einem oder mehreren der vorhergehenden Ansprüche, **dadurch gekennzeichnet, dass** der Außendurchmesser des Schraubrings (8) dem Außendurchmesser der Ringsicke (4) entspricht.

## Claims

1. Pipe with a screw-on screw ring, in particular plastic pipe for sewage pipes, which has at least one socket end which is provided with an annular bead (4) and a socket neck (3) and forms a first pipe (1), into the socket end of which the spigot end of a second pipe or shaped part (13) can be inserted and removed again therefrom, and in which an elastic annular seal (6) is inserted into the annular bead (4), **characterised in that** the socket neck (3) of the pipe (1) is provided with a screw thread (9), which is an internal thread formed on the inside of the socket neck (3), onto which the screw ring (8) can be screwed, the screw ring comprising an inner ring part (10) with an external thread and an outer ring part (11), between which an annular gap is formed, and the ring parts (10, 11) are connected via an ring base (12) facing away from the annular bead (4), the inner diameter of the outer ring part (11) of the screw ring (8) being selected to be larger than the outer diameter of the socket neck (3), and the outer ring part (11) surrounding the socket neck (3) on the outside when the screw ring (8) is screwed on, and the socket neck (3) thus being received in the annular gap, and wherein the front edge (14) of the inner ring part (10), when the screw ring (8) is screwed onto the screw thread (9), compresses the annular seal (6) inserted into the annular bead (4) and locks the spigot end of the second pipe or shaped part (13) in the first pipe (1), the inner diameter of the annular bead being greater than the inner diameter of the socket neck.

2. Pipe with a screw-on screw ring, in particular plastic pipe for sewage pipes, which has at least one socket end which is provided with an annular bead (4) and a socket neck (3) and forms a first pipe (1), into the socket end of which the spigot end of a second pipe or shaped part (13) can be inserted and removed again therefrom, and in which an elastic annular seal (6) is inserted into the annular bead (4), **characterised in that** the socket neck (3) of the pipe (1) is provided with a screw thread (9), which is an external thread formed on the outside of the socket neck (3), onto which the screw ring (8) can be screwed, the screw ring comprising an inner ring part (10) and an outer ring part (11) with an internal thread, between which an annular gap is formed, and the ring parts (10, 11) are connected via a ring base (12) facing away from the annular bead (4), the inner diameter of the outer ring part (11) of the screw ring (8) being selected to be larger than the outer diameter of the socket neck (3), and the outer ring part (11) surrounding the socket neck (3) on the outside when the screw ring (8) is screwed on, and the socket neck (3) thus being received in the annular gap, and wherein the front edge (14) of the inner ring part (10), when the screw ring (8) is screwed onto the screw thread (9), compresses the ring seal (6) inserted into the ring bead (4) and locks the spigot end of the second pipe or shaped part (13) in the first pipe (1), the inner diameter of the ring bead being greater than the inner diameter of the socket neck.

3. Pipe according to claim 1 or 2, **characterised in that** a pressure and sliding ring (7) is inserted into the annular bead (4) between the front edge of the inner ring part (10) and the annular seal (6).

4. Pipe according to claim 1, 2 or 3, **characterised in that** the annular seal (6) is oval in cross-section.

5. Pipe according to claim 4, **characterised in that** the pressure and sliding ring (7) has a ring groove (16) on its side facing the annular seal (6), which, when the screw ring (8) is screwed on, causes a radial displacement of the rear edge of the annular seal (6) in the direction of the surface of a second pipe (13) to be inserted.

6. Pipe according to one of claims 1 - 3, **characterised in that** the annular seal (6) is triangular or wedge-shaped in cross-section, its adjacent leg running radially to the axis of the sealing ring and its opposite leg running parallel to the axis of the sealing ring in the bead base.

7. Pipe according to claim 6, **characterized in that** the opposite leg of the ring seal is arranged in the bead bottom of the annular bead (4) and the adjacent leg is directed towards the front edge of the inner ring part (10).

8. Pipe according to one or more of claims 1 - 3, **characterised in that** the annular seal (24) is U-shaped in cross-section with two flanks (22, 23) and an inner base side, the flanks (22, 23) of the annular seal (24) extending radially to the sealing ring axis.

9. Pipe according to claim 8, **characterized in that** the base side of the ring seal (24) is provided with a circumferential rib (25).

10. Pipe according to claim 8 or 9, in which the base side of the annular seal (24) rests on the surface of the spigot end of the second pipe (13) and the flanks (22, 23) of the annular seal (24) rest in the bead base of the annular bead (4).

11. Pipe according to claim 1 or 2, **characterised in that** the axial length of the outer ring part (11) is dimensioned such that the front edge of the outer ring part (11) is guided up to the outer rear flank (20) of the annular bead (4) when the screw ring (8) is screwed onto the socket neck (3).

12. Pipe according to claim 1 or 2, **characterised in that** the socket neck (3) is provided with an external contrasting marking (21) by means of which the connection state of a pipe joint composed of a first pipe (1) and a second pipe (13) can be visually recognised.

13. Pipe according to one or more of the preceding claims, **characterised in that** the thread between the screw ring and the socket neck is provided with a locking nose which prevents unintentional unscrewing of the screw ring (8) from the screw thread (9) of the first pipe (1).

14. Pipe according to one or more of the preceding claims, **characterized in that** the screw ring (8) is provided with an external profiling (26).

15. Pipe according to one or more of the preceding claims, **characterized in that** the outer diameter of the screw ring (8) corresponds to the outer diameter of the annular bead (4).

## Revendications

1. Tube avec bague filetée apte à être vissée, en particulier tube en matière plastique pour conduites d'eaux usées qui présente au moins une extrémité de manchon qui est pourvue d'une nervure de bague (4) et d'un collet de manchon (3) et forme un premier tube (1) dans l'extrémité de manchon duquel l'embout d'un deuxième tube ou élément moulé (13) est apte à être emmanché et à en être retirée, et dans lequel une bague d'étanchéité élastique (6) est placée dans la nervure de bague (4), **caractérisé en ce que** le collet de manchon (3) du tube (1) est pourvu d'un filetage (9) qui est un filetage intérieur formé sur le côté intérieur du collet de manchon (3), sur lequel la bague filetée (8) est apte à être vissée, dans lequel la bague filetée contient une partie de bague intérieure (10) avec un filetage extérieur et une partie de bague extérieure (11) entre lesquelles est formé un espace annulaire, et les parties de bague (10, 11) sont reliées par un fond de bague (12) opposé à la nervure de bague (4), dans lequel le diamètre intérieur de la partie de bague extérieure (11) de la bague filetée (8) est choisi plus grand que le diamètre extérieur du collet de manchon (3), et la partie de bague extérieure (11), lors du vissage de la bague filetée (8), entoure le collet de manchon (3) sur le côté extérieur et le collet de manchon (3) est ainsi logé dans l'espace annulaire, et dans lequel l'arête avant (14) de la partie de bague intérieure (10), lors du vissage de la bague filetée (8) sur le filetage (9), comprime la bague d'étanchéité (6) placée dans la nervure de bague (4) et arrête l'embout du deuxième tube ou élément moulé (13) dans le premier tube (1), dans lequel le diamètre intérieur de la nervure de bague est plus grand que le diamètre intérieur du collet de manchon.

2. Tube avec bague filetée apte à être vissée, en particulier tube en matière plastique pour conduites d'eaux usées qui présente au moins une extrémité de manchon qui est pourvue d'une nervure de bague (4) et d'un collet de manchon (3) et forme un premier tube (1) dans l'extrémité de manchon duquel l'embout d'un deuxième tube ou élément moulé (13) est apte à être emmanché et à en être retirée, et dans lequel une bague d'étanchéité élastique (6) est placée dans la nervure de bague (4), **caractérisé en ce que** le collet de manchon (3) du tube (1) est pourvu d'un filetage (9) qui est un filetage extérieur formé sur le côté extérieur du collet de manchon (3), sur lequel la bague filetée (8) est apte à être vissée, dans lequel la bague filetée contient une partie de bague intérieure (10) et une partie de bague extérieure (11) avec un filetage intérieur entre lesquelles est formé un espace annulaire, et les parties de bague (10, 11) sont reliées par un fond de bague (12) opposé à la nervure de bague (4), dans lequel le diamètre intérieur de la partie de bague extérieure (11) de la bague filetée (8) est choisi plus grand que le diamètre extérieur du collet de manchon (3), et la partie de bague extérieure (11), lors du vissage de la bague filetée (8), entoure le collet de manchon (3) sur le côté extérieur et le collet de manchon (3) est ainsi logé dans l'espace annulaire, et dans lequel l'arête avant (14) de la partie de bague intérieure (10), lors du vissage de la bague filetée (8) sur le filetage (9), comprime la bague d'étanchéité (6) placée dans la nervure de bague (4) et arrête l'embout du deuxième tube ou élément moulé (13) dans le premier tube (1), dans lequel le diamètre intérieur de la nervure de bague est plus grand que le diamètre intérieur du collet de manchon.

3. Tube selon la revendication 1 ou 2, **caractérisé en ce qu'**entre l'arête avant de la partie de bague intérieure (10) et la bague d'étanchéité (6), une bague de pression et de glissement (7) est placée dans la nervure de bague (4).

4. Tube selon la revendication 1, 2 ou 3, **caractérisé en ce que** la bague d'étanchéité (6) a une forme ovale en section transversale.

5. Tube selon la revendication 4, **caractérisé en ce que** la bague de pression et de glissement (7) présente sur son côté tourné vers la bague d'étanchéité (6) une rainure annulaire (16) qui, lors du vissage de la bague filetée (8), provoque un déplacement radial de l'arête arrière de la bague d'étanchéité (6) dans la direction de la surface d'un deuxième tube (13) à emmancher.

6. Tube selon l'une des revendications 1 à 3, **caractérisé en ce que** la bague d'étanchéité (6) est triangulaire ou cunéiforme en section transversale, dans lequel ses côtés adjacents s'étendent radialement par rapport à l'axe de bague d'étanchéité et ses côtés opposés s'étendent parallèlement à l'axe de bague d'étanchéité dans le fond de moulure.

7. Tube selon la revendication 6, **caractérisé en ce que** les côtés opposés de la bague d'étanchéité (6) sont disposés dans le fond de la nervure de bague (4) et les côtés adjacents sont dirigés vers l'arête avant de la partie de bague intérieure (10).

8. Tube selon l'une ou plusieurs des revendications 1 à 3, **caractérisé en ce que** la bague d'étanchéité (24) a une forme en U en section transversale, avec deux flancs (22, 23) et un côté de base intérieur, dans lequel les flancs (22, 23) de la bague d'étanchéité (24) s'étendent radialement par rapport à l'axe de bague d'étanchéité.

9. Tube selon la revendication 8, **caractérisé en ce que** le côté de base de la bague d'étanchéité (24) est pourvu d'une nervure périphérique (25).

10. Tube selon la revendication 8 ou 9, dans lequel le côté de base de la bague d'étanchéité (24) est appliqué contre la surface de l'embout du deuxième tube (13) et les flancs (22, 23) de la bague d'étanchéité (24) sont appliqués dans le fond de la nervure de bague (4).

11. Tube selon la revendication 1 ou 2, **caractérisé en ce que** la longueur axiale de la partie de bague extérieure (11) est calculée de telle sorte que l'arête avant de la partie de bague extérieure (11), quand la bague filetée (8) est vissée sur le collet de manchon (3), soit guidée jusqu'au flanc arrière (20) de la nervure de bague (4).

12. Tube selon la revendication 1 ou 2, **caractérisé en ce que** le collet de manchon (3) est pourvu d'un marquage contrastant extérieur (21) à l'aide duquel l'état de raccordement d'un raccord de tubes composé d'un premier tube (1) et d'un deuxième tube (13) est reconnaissable visuellement.

13. Tube selon l'une ou plusieurs des revendications précédentes, **caractérisé en ce que** le filetage entre la bague filetée et le collet de manchon est pourvu d'une saillie d'arrêt qui empêche un dévissage involontaire de la bague filetée (8) du filetage (9) du premier tube (1).

14. Tube selon l'une ou plusieurs des revendications précédentes, **caractérisé en ce que** la bague filetée (8) est pourvue d'un profilage extérieur (26).

15. Tube selon l'une ou plusieurs des revendications précédentes, **caractérisé en ce que** le diamètre extérieur de la bague filetée (8) correspond au diamètre extérieur de la nervure de bague (4).
